# EUROPEAN PATENT SPECIFICATION

(11) **EP 3 790 632 B1**
(45) Date of publication and mention of the grant of the patent: **09.12.2026**
(21) Application number: 19800614.0
(22) Date of filing: 07.05.2019
(51) Int. Cl.: G01N 21/33, G01N 21/47, G01N 21/84

(54) **IN VITRO DIFFUSE REFLECTANCE SPECTROSCOPY**
DIFFUSE IN-VITRO-REFLEXIONSSPEKTROSKOPIE
SPECTROSCOPIE DE RÉFLECTANCE DIFFUSE IN VITRO

(30) Priority: 08.05.2018 US 201862668289 P
(43) Date of publication of application: 17.03.2021
(73) Proprietor: Solar Light Company, LLC, Glenside, PA 19038 (US)
(72) Inventor: COLE, Curtis, Glenside, Pennsylvania 19038 (US); SILVERMAN, Jay, Glenside, Pennsylvania 19038 (US)
(74) Representative: Haseltine Lake Kempner LLP
(86) International application number: PCT/US2019/031091
(87) International publication number: WO 2019/217403

(56) References cited:
- US-A- 5 640 957
- US-A- 6 130 435
- US-A1- 2002 167 669
- US-A1- 2010 012 850
- US-A1- 2017 108 433
- US-B2- 8 159 656
- US-B2- 9 063 054
- CURTIS COLE ET AL: "Metal oxide sunscreens protect skin by absorption, not by reflection or scattering", PHOTODERMATOLOGY, PHOTOIMMUNOLOGY & PHOTOMEDICINE, vol. 32, no. 1, 10 November 2015 (2015-11-10), United States, United Kingdom, pages 5 - 10, XP055500311, ISSN: 0905-4383, DOI: 10.1111/phpp.12214
- EDUARDO RUVOLO JR ET AL: "Diffuse reflectance spectroscopy for ultraviolet A protection factor measurement: correlation studies between in vitro and in vivo measurements", PHOTODERMATOLOGY, PHOTOIMMUNOLOGY & PHOTOMEDICINE, vol. 25, no. 6, 1 December 2009 (2009-12-01), United States, United Kingdom, pages 298 - 304, XP055339257, ISSN: 0905-4383, DOI: 10.1111/j.1600-0781.2009.00469.x
- MILOSEVIC ET AL.: "A Review Of Ft-lr Diffuse Reflection Sampling Considerations", APPLIED SPECTROSCOPY REVIEWS, vol. 37, no. 4, 2002, pages 347 - 364, XP055651485
- MORABITO ET AL.: "Review of Sunscreen and the Emergence of Non-Conventional Absorbers and Their Applications in Ultraviolet Protection", INTERNATIONAL JOURNAL OF COSMETIC SCIENCE, vol. 33, no. 5, 1 April 2011 (2011-04-01), pages 385 - 390, XP055000034
- LOTT ET AL.: "Uniformity of Sunscreen Product Application: a Problem in Testing, a Problem for Consumers", PHOTODERMATOLOGY, PHOTOIMMUNOLOGY AND PHOTOMEDICINE, vol. 19, no. 1, February 2003 (2003-02-01), pages 17 - 20, XP055651507
- LABSPHERE: "UV-2000S", LABSPHERE, 11 April 2017 (2017-04-11), XP055651544, Retrieved from the Internet <URL:www.labsphere.com/labsphere-products-solutions/components-accessories/spf-upf-testers/uv-2000s>

## Description

### FIELD

In one embodiment, the presently disclosed technology relates to developing an all-purpose device capable of *in vitro* spectral analysis of sunscreen compositions as well as diffuse reflectance spectroscopy (DRS) capabilities on human skin. As used herein, the terms "sunscreen" and "sunscreen composition" refer to a substance that includes active ingredients as well as inactive ingredients, vehicles and/or carriers, and is suitable for application to the skin. A "sunscreen active ingredient" is a chemical entity that is an active ingredient in a sunscreen composition and has the ability to protect skin from the harmful effect of light.

### BACKGROUND AND DESCRIPTION OF RELATED ART

Measurement of sunscreen efficacy against sunburn is determined by human SPF testing, wherein the skin is irradiated with solar simulated ultraviolet radiation (UV)(290-400 nm) with the sunscreen composition applied to the skin's surface, and in a second location without the sunscreen composition on the skin. The ratio of the UV doses required to cause erythema (sunburn) with the sunscreen divided the dose without a sunscreen is the Sun Protection Factor, commonly known as the SPF of a sunscreen. Scientists have struggled for over 50 years to come up with an *in vitro* test method to be able to eliminate the clinical SPF testing on humans. Currently, the most promising testing method is the hybrid diffuse spectroscopy (HDRS) methodology. *See* Ruvolo E., Kollias N., Cole C., "New non-invasive approach assessing in vivo Sun Protection Factor (SPF) using Diffuse Reflectance Spectroscopy and in vitro transmission," Photodermatol. Photoimmunol. Photomed. 30:4 202-211, 2014. *See also* Rohr M., Ernst N., Schrader A., "Hybrid Diffuse Reflectance Spectroscopy: Non-erythemal in vivo testing of sunscreen SPF," Skin Pharmacol. Physiol. 31:220-228, 2018.

HDRS spectroscopy currently requires two sets of instruments and measurements to generate data to assess sunscreen protection on the skin from 290 to 400 nm. The *in vivo* Diffuse Reflectance can only measure sunscreen absorbance in the UVA portion of the spectrum on human skin as the proteins, DNA, and melanin in the skin absorb very strongly in the UVB (290-320 nm) range, and insufficient light is remitted back to the receiving optics to fully characterize the sunscreen in this region. So, a second instrument using thin film spectroscopic evaluation of the sunscreen is needed to capture the sunscreen absorbance shape through the entire UVB and UVA spectrum. The HDRS measurement is then used to adjust the magnitude of the *in vitro* absorbance measurement, as described in the above-cited literature, in order to accurately predict the true SPF value of the protection.

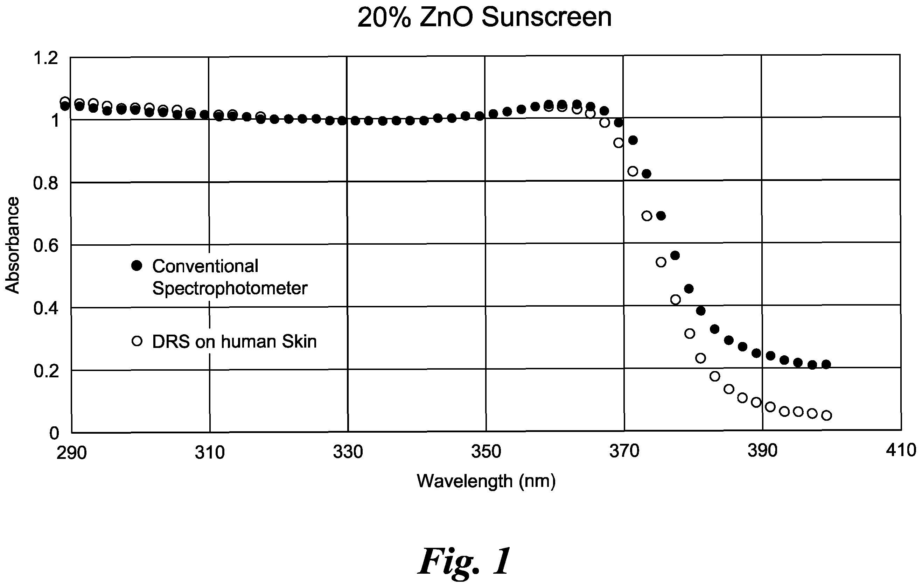

One difficulty encountered using conventional *in vitro* spectrometers (e.g., those developed or manufactured by LABSPHERE^{™} of Sutton, New Hampshire and AGILENT^{™} of Santa Clara, California) is that they do not accurately record the spectrum of inorganic filters due to loss of low angle scattered light from the sample. This results in an inability to go close to baseline (0) above the absorptive range of the energy band gap phenomena above 370 nm (see Fig. 1). These two measurements (conventional spectrophotometric transmission measurement and DRS measurement) yield different critical wavelength values (wavelength below which 90% of the absorbance area under the curve (AUC) exist), and also different UVA-protection factors (UVA-PF).

The *in vivo* DRS spectrum on human skin is the correct spectrum as it is obtained directly on human skin, and the optics has capabilities to capture remitted off-angle scattered light missing from the conventional spectrophotometric measurements resulting in false absorbance values.

A paper entitled "Metal oxide sunscreens protect skin by absorption, not by reflection or scattering", by Curtis Cole et al., Photodermatol. Photoimmunol. Photomed. 32:1 5-10, 2015, discloses an assessment of titanium dioxide and zinc oxide as metal oxide sunscreens. Cole *et al.* further discloses that an optical integrating sphere was used to measure a transmission value and a reflectance value of titanium dioxide and zinc oxide. Transmission and reflectance values were obtained by dispersing a test material (e.g., titanium dioxide or zinc oxide) in liquid petrolatum, applying a layer of a petrolatum sample containing the test material on a PMMA plate, and securing the PMMA plate to a sample port within the integrating sphere. Transmission and reflectance values were obtained using the integrating sphere over the range of wavelengths 250 to 800 nm.

US 2010/012850 discloses the use of an ultraviolet radiation detector for detecting an ultraviolet radiation transmitted through or reflected from a measurement sample from a light beam including at least the ultraviolet radiation.

US 2017/108433 discloses an optical sensor device which measures in a spatially resolving manner.

A paper entitled "Diffuse reflectance spectroscopy for ultraviolet A protection factor measurement: correlation studies between in vitro and in vivo measurements" by Eduardo Ruvolo Jr et al., Photodermatol. Photoimmunol. Photomed. 25:6 298-304, 2009, discloses a study aiming to correlate the measurements of the UVA protection factor value (PFA value) via in vivo diffuse reflectance spectroscopy (DRS) and to compare this method with the in vitro method of measuring the PFA value, as well as with the in vivo persistent pigment darkening (PPD) and PFA methodologies.

### BRIEF SUMMARY

There is a need or desire to create one device capable of completing both parts of the above-described prior art test, which would eliminate unnecessary instrumentation and complexity, and reduce expense. This and other needs are addressed by the presently disclosed technology.

Combining these techniques (e.g., full scan spectroscopic measurement 290-400nm, using a thin artificial substrate and reflective surface, and measuring the diffuse reflectance using the same instrumentation on human skin), it is possible to predict the *in vivo* SPF and UVA-PF measures without having to irradiate human subjects with harmful UV (with the exception of the very small UVA exposure necessary for the human DRS measurements).

In one aspect, the presently disclosed technology is directed to a method of *in vitro* measurement of the protection of a sunscreen composition. The method includes providing a sunscreen substrate and applying the sunscreen composition to the sunscreen substrate. The sunscreen substrate is positioned on top of i) a layer of gelatin or other media containing non-absorbing scattering elements therein, or ii) both a reflective surface and a layer of gelatin or other media containing non-absorbing scattering elements therein. The method includes directing a light source at the sunscreen composition on the sunscreen substrate, the light source being configured to emit light between 290nm and 400nm. The method includes measuring the amount of light remitted from the sunscreen.

In another aspect, the presently disclosed technology is directed to system of *in vitro* measurement of the protection of a sunscreen composition. The system includes a fiber optic guide and a light emission and sensing device positioned at one end of the fiber optic guide. The system includes a sunscreen substrate assembly positioned at another end of the fiber optic guide. The sunscreen substrate assembly includes a sunscreen substrate configured such that the sunscreen composition can be applied to the sunscreen substrate. The sunscreen substrate is positioned on top of i) a layer of gelatin or other media container scattering or reflective elements therein, or ii) both a reflective surface and a layer of gelatin or other media containing non-absorbing scattering elements therein. A photosensor of the light emission and sensing device is configured to measure at least some light emitted from the light emission and sensing device that is remitted off of the sunscreen substrate assembly. The light emission and sensing device is configured to emit light between 290nm and 400nm.

### BRIEF DESCRIPTION OF THE DRAWINGS

The foregoing summary, as well as the following detailed description of the presently disclosed technology, will be better understood when read in conjunction with the appended drawings, wherein like numerals designate like elements throughout. For the purpose of illustrating the presently disclosed technology, there are shown in the drawings various illustrative embodiments. It should be understood, however, that the presently disclosed technology is not limited to the precise arrangements and instrumentalities shown. In the drawings:
Fig. 1 is a graph charting the absorbance vs. wavelength of 20% zinc oxide sunscreen;
Fig. 2 is a schematic representation of measurement of the protection of a sunscreen composition, wherein *in vivo* DRS mode is employed on human skin or skin substrate;
Fig. 2A is a magnified view of area A of Fig. 2;
Fig. 3 is a schematic representation of a comparative example, wherein *in vitro* DRS mode is employed on a first test substrate;
Fig. 3A is a magnified view of area A of Fig. 3;

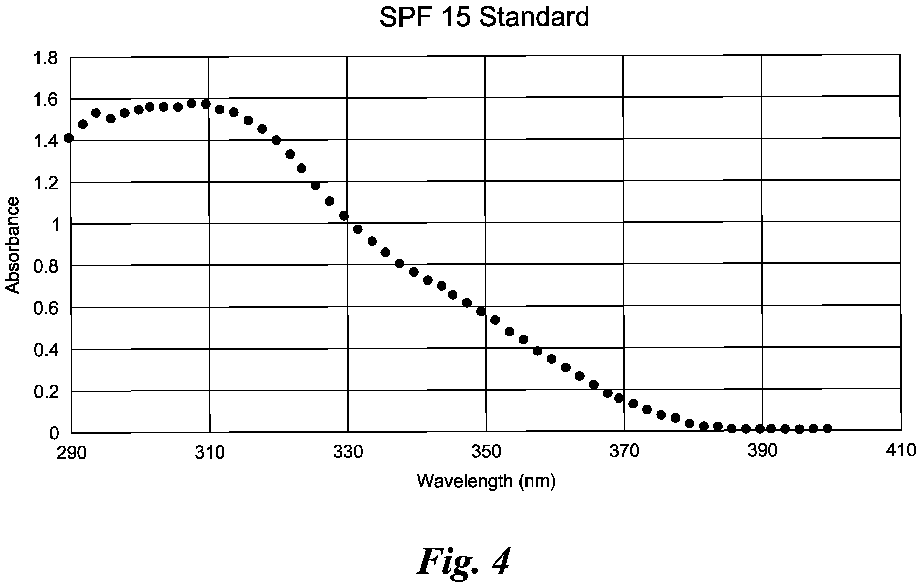

Fig. 4 is a graph charting the absorbance vs. wavelength of SPF 15 sunscreen;
Fig. 5 is a graph charting the absorbance vs. wavelength for 20% zinc oxide containing inorganic sunscreen on plates of different thicknesses/distances from the reflective surface;
Fig. 6 is a schematic representation of an embodiment of the presently disclosed technology, wherein *in vitro* DRS mode is employed on a second test substrate;
Fig. 6A is a magnified view of area A of Fig. 6; and
Fig. 7 is a graph charting the absorbance vs. wavelength for 20% zinc oxide containing sunscreen on a gelatin layer.

### DETAILED DESCRIPTION

While systems, devices and methods are described herein by way of examples and embodiments, those skilled in the art recognize that the presently disclosed technology is not limited to the embodiments or drawings described. Rather, the presently disclosed technology covers all modifications, equivalents and alternatives falling within the scope of the appended claims. Features of any one embodiment disclosed herein can be omitted or incorporated into another embodiment.

Any headings used herein are for organizational purposes only and are not meant to limit the scope of the description or the claims. As used herein, the word "may" is used in a permissive sense (i.e., meaning having the potential to) rather than the mandatory sense (i.e., meaning must). Unless specifically set forth herein, the terms "a," "an" and "the" are not limited to one element but instead should be read as meaning "at least one." The terminology includes the words noted above, derivatives thereof and words of similar import.

### In Vivo Mode

Whilst embodiments of the present disclosure relate to methods and apparatus for *in-vitro* measurement, optionally, elements of the technology could alternatively be used in an *in-vivo* mode. In one example, a light source 12 can be configured to emit light over the range 290 to 400 nm, and optionally up to 600 nm for the measurement of sunscreens. This range can be adjusted to include longer wavelengths through the visible and infrared range for other applications in skin spectroscopy for measurement of applications of ingredients or emollients on the skin surface, or for skin moisturization for example.

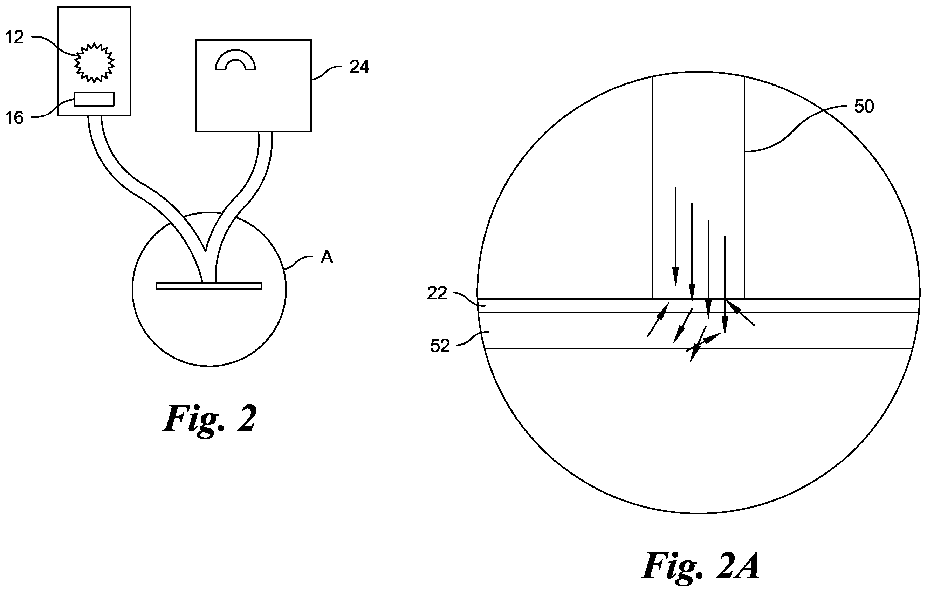

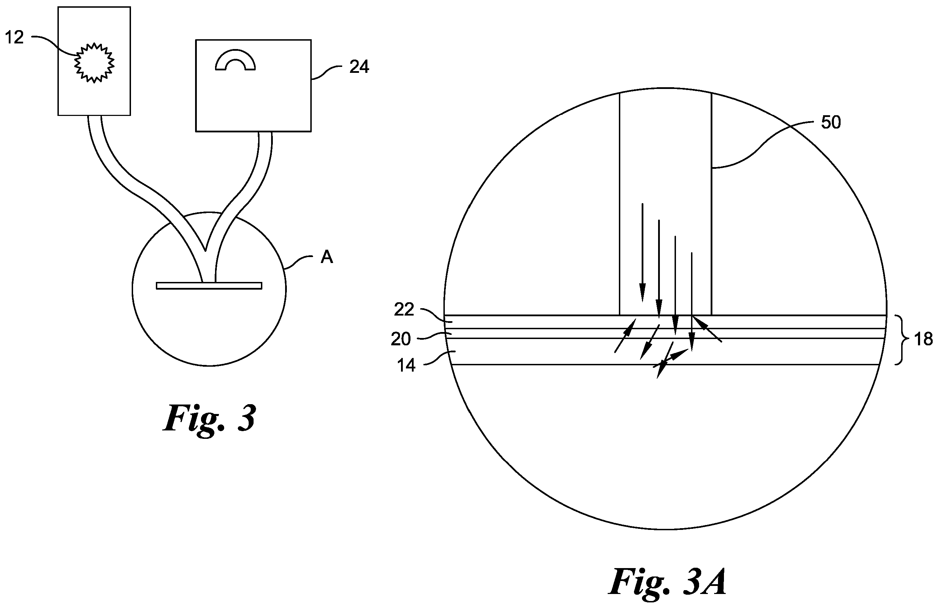

Fig. 2 shows the light source 12 as being an optional xenon arc lamp, which can be operated in either flash mode or as a continuous source. In one example shown in Figs. 3 and 3A, light from the lamp 12 is reflected off of a sunscreen substrate assembly 18 (sometimes referred to herein as the "test substrate assembly"), which can optionally include a reflecting surface 14, such as but not limited to a dichroic "cold" UV reflecting mirror, to diminish the visible and IR portions of the spectrum. This provides full UVA output over the range of approximately 320 to 420 nm (although longer wavelengths can also be included).

The light source 12 can incorporate or include an optional filter 16 (see Fig. 2), such as but not limited to a UVB blocking filter to eliminate harmful sunburning radiation from exposure to the skin. Optionally, the filter 16 can be a SCHOTT^{™} (Duryea, PA) WG335 filter having a thickness of 3 mm in thickness. Prior art examples of DRS or HDRS measurements of sunscreens on human skin utilize monochromators before and after the light source used to illuminate the skin, and the monochromators are synched to the same wavelength. *See, e.g.,* Gilles R., Moyal D., Forestier S, Kollias N., "Non-invasive in vivo determination of UVA efficacy of sunscreens using diffuse reflectance spectroscopy," Photoderm. Photoimmunol. Photomed. 19:4, 190-194, 2003. Broad spectrum polychromatic light is used in the example shown in Figs. 2 and 2A.

The system can employ a fiber optic light guide(s) and a diffuse reflectance head that is the same as that described in International Publication No. WO 2018/217432. Optionally, linear optical output is separated from the linear optical reading slivers by approximately 40 µm. As shown in Figs. 2 and 2A, the light leaving the optical head 50 is measured first on unprotected skin 52 (e.g., can be human skin or excised skin from surgical remnants, cadavers, or chicken skin, or pig skin excised post-slaughter, or the like) to determine the baseline skin remission as a function of wavelength from 320 to 400 nm. Sunscreen composition 22 is then applied to the surface of the human skin 52 or a skin substrate (such as animal skin) at the desired density, typically 2 mg/cm² and allowed to dry and then the remission through the skin is measured again at each wavelength sequentially (e.g., scanning monochromator) or simultaneously (e.g., CCC spectrometer).

The transmission through the sunscreen is calculated at each wavelength as: Eq. 1: ${T}_{λ} = √ \frac{{It}_{λ}}{{I}_{0 λ}}$ Eq. 2: ${A}_{λ} = - log \left({T}_{λ}\right)$ Absorbance spectra are calculated as the negative log of the transmission values. This absorbance spectrum is used to adjust the *in vitro* absorbance measurements determined separately to an absolute absorbance range.

### Full Spectrum In Vitro Absorbance Scanning

In conventional *in vitro* testing, the full spectrum absorbance scan of the sunscreen is done by applying sunscreen to a UV transmissive substrate (such as a roughened quartz plate, or PMMA plastic plate) and the treated plate is placed into a light beam within a spectro photometer such as a LABSPHERE^{™} or VARIAN CARY^{™} and the light emerging through the treated plate is measured (no mirror or reflective substrate is placed behind the transmissive substrate), and the absorbance is calculated by comparison of the light intensity without the sunscreen on the plate, and the light intensity with the sunscreen on the plate where: Eq. 3: ${A}_{λ} = - log \left(\frac{{I}_{tλ}}{{I}_{0 λ}}\right)$ Where *A_{λ}* is the absorbance of the sunscreen at each wavelength, I_{tλ} is the intensity of the transmitted light through the sunscreen at each wavelength and I_{0λ} is the intensity of the transmitted light at each wavelength without the sunscreen on the plate at each wavelength.

Referring to Figs. 3 and 3A, in comparative example, the design for the *in vitro* absorbance measurement can include the light source 12 (e.g., a lamp in flash mode or continuous), with the dichroic "cold" UV reflecting mirror 14, but without optical filtration (UG11 or WG335 filtration) for use on or in the *in vitro* test substrate assembly 18. The light from the lamp 12 would be delivered through the same bifurcated fiber optic bundle and optic head used for the DRS measurements on skin, as discussed above.

Referring again to Fig. 3A, the sunscreen substrate assembly 18 can optionally include a sunscreen substrate 20. The sunscreen substrate 20 can be a plastic plate, such as but not limited to PMMA or acrylic, with a roughened surface for scattering, or a molded PMMA plate, with scattering non-absorbing media such as air bubbles, or plastic beads with no absorptive properties. The sunscreen substrate assembly 18 can also optionally include the reflective surface 14, such as a mirror or other reflecting material, on the bottom of the sunscreen substrate 20 to reflect the light back through the sunscreen substrate 20 and the sunscreen composition 22 on the top surface of the sunscreen substrate 20, to be captured by the receiving fiber optic 50, and received at or imaged into a photosensor or light sensing device 24, such as a dispersing monochromator with a CCD detector system for instantaneous or sequential scanning of the spectral intensity at each wavelength or a CCD spectrometer. The sunscreen substrate assembly 18 can be used with sunscreens containing organic (dissolved) ultraviolet filters.

The absorbance is calculated by Eq. 1 and Eq. 2 shown above, wherein T_{λ} = the transmission of the light through the sunscreen at each wavelength, I_{tλ} is the intensity of the light transmitted twice through the sunscreen and the plate at each wavelength, I_{0λ} is the intensity of the light transmitted twice through the plate (no sunscreen) at each wavelength, and the absorbance at each wavelength A_{λ} is simply the -log of T_{λ.}

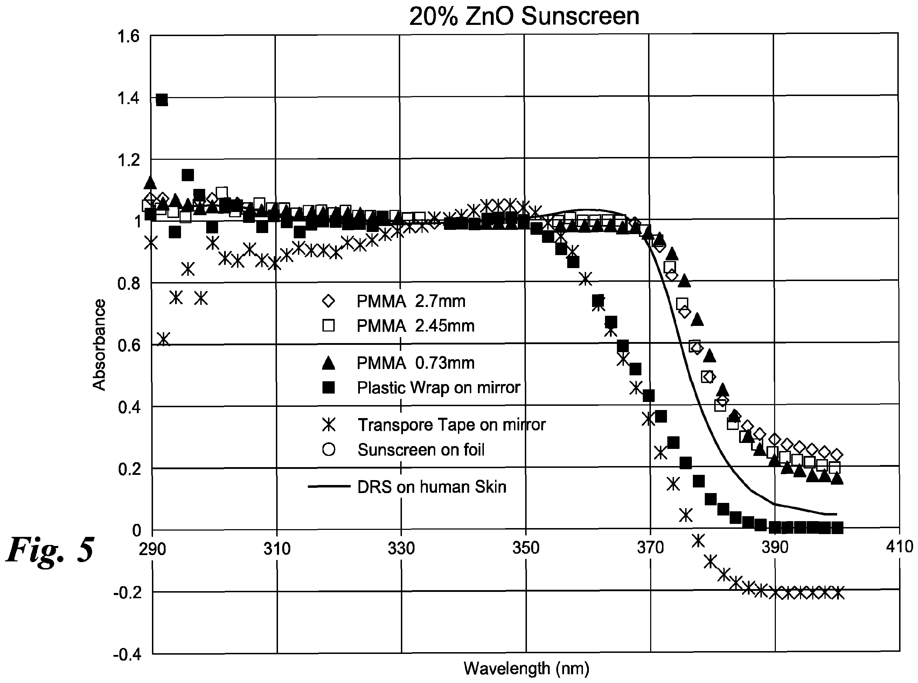

For measurements of sunscreens containing inorganic sunscreen active ingredients, such as zinc oxide or titanium dioxide, measurements with the sunscreen substrate assembly 18 have shown that the thickness of the substrate is important to capturing the off angle reflected and remitted light from inorganic sunscreen active ingredients such as ZnO (see Fig. 5). Thus, the sunscreen substrate should be equal or less than 0.73 mm from the application surface to the front of the reflective surface to mimic the human skin use situation and have absorbance approaching zero near 400 nm. Many sunscreen substrates may be used for this purpose, such as but not limited to thin plastic food wrap, TRANSPORE^{™} tape (manufactured by 3M^{™} of St. Paul, MN), nylon film, lamb-skin condoms, VITRO SKIN^{™} (manufactured by IMS-Inc.^{™} of Portland, ME) having sufficient UV transmission in the UVB (290-320 nm) range to transmit the reflected light after passing through the sunscreen composition.

However, simply applying the sunscreen composition to such a substrate over the reflective surface does not give accurate results compared with the *in vivo* human skin DRS measurement (solid line) shown in Fig. 5. The sunscreen substrate assembly 18 shown in Fig. 3A yielded a skewed absorbance profile as well as inappropriate "reflection" (negative absorbance) at wavelengths above 370 nm for the plastic wrap. So there is a critical distance needed for mixing and diffusion of the light for appropriately shaped spectral absorbance measurements of sunscreens containing inorganic sunscreen active ingredients.

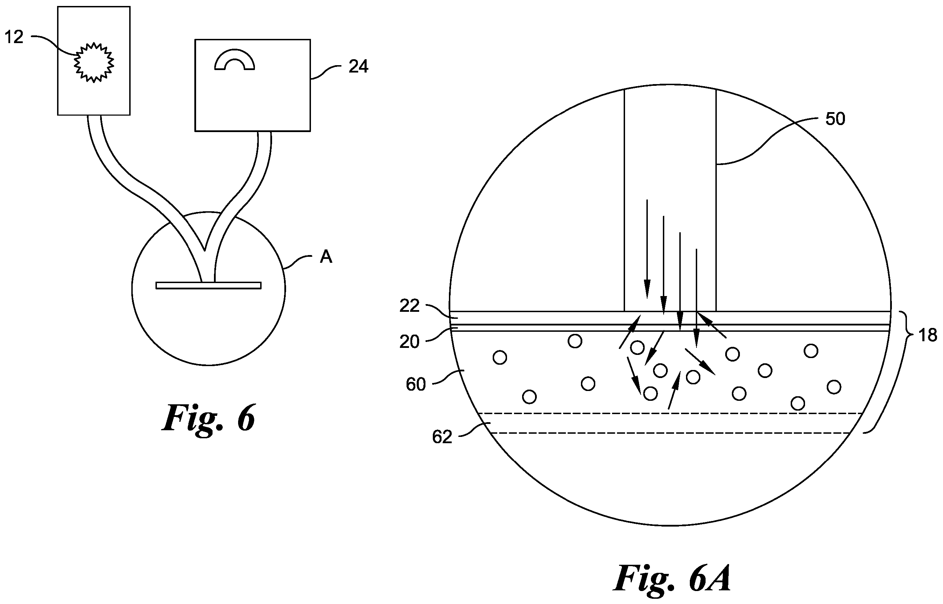

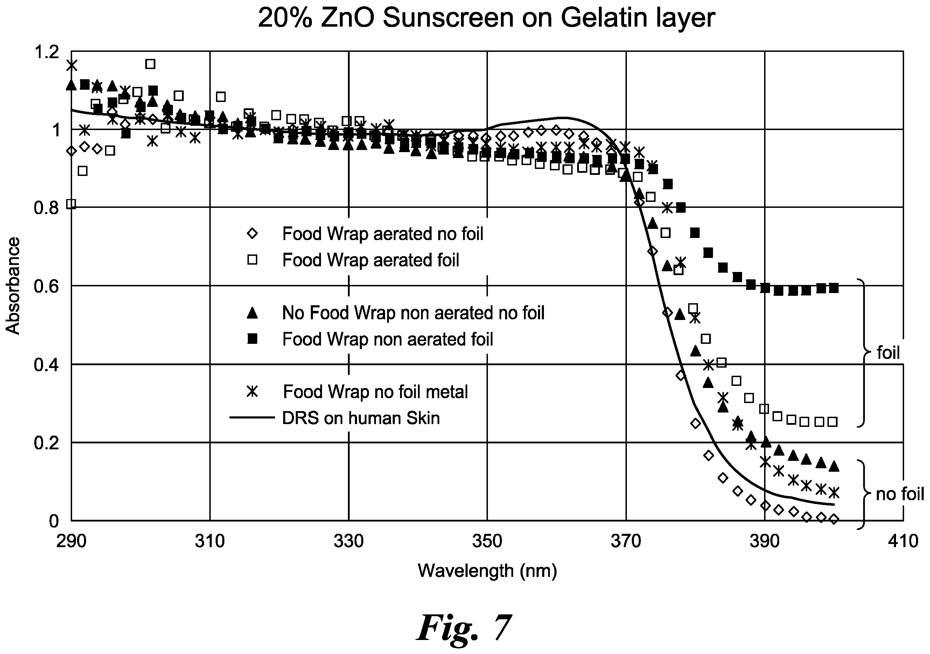

To address the above-described drawback, an approach to more closely mimic the skin's surface and content, other substrate assemblies were tested (see Figs. 6 and 6A). HELIOSCIENCE^{™} (manufactured by Helioscience of Marsielles, FR) PMMA plates 20 were inverted, and the well created was filled with KNOX^{™} gelatin 60 (e.g., collagen) to a thickness of approximately 1.25 mm or a similar media with scattering reflective elements. Sets of inverted HELIOSCIENCE^{™} PMMA plates were prepared with aerated gelatin mixture, and one set was prepared with un-aerated gelatin and allowed to set overnight. One example of gelatin containing aluminum metal filings for reflection and scattering was also prepared. The aerated sample provides air bubbles to further scatter and mix the light that has passed through the sunscreen composition. Some samples were prepared with a sheet of food grade aluminum foil 62 at the bottom of the well with the gelatin placed over the surface of the foil. Measurements were made on plastic food wrap over the gelatin surface. Some measurements were also done with sunscreen application directly to the surface of the gelatin (without the sunscreen substrate as depicted in Fig. 6A). The data is shown in Fig. 7.

Calculations for absorbance spectra would be made using measurements with, and without the sunscreen in place. The negative log of the square root of the ratio of intensity with the sunscreen divided by the intensity without the sunscreen provides the absorbance values at each wavelength, as shown in Eqs. 1 and 2.

The data showed the closest approximation to the human DRS absorbance curve was seen with aerated gelatin and non-aerated gelatin with the metal filings but without the aluminum foil reflector sheet in the bottom for both. Non-aerated gelatin was also similar to the human in vivo absorbance curve when used without the aluminum foil sheet at the bottom. The addition of the foil to the bottom of the well covered with the gelatin had a very distorting effect to the absorbance measurements and should not be used. Application of sunscreen directly to the surface of the gelatin gave a good measurement, however the fragility of the gelatin surface was not optimal and made spreading difficult. A more firm or rigid media would allow direct application to the surface.

The optimal device for measurement of the diffuse reflectance of a sunscreen uses a thin (less than 0.73 mm) substrate to which the sunscreen is applied, such as but not limited to plastic food wrap (SARAN^{™} Wrap), TRANSPORE^{™} Tape, nylon film, lambskin condoms, VITRO SKIN^{™} and similar thin UVB transmissive substrates. The substrate is then on top of a scattering/diffusing medium, such as but not limited to a gelatin media or similar diffusing gels or materials, which may contain trapped air bubbles, air filled beads, or scattering and reflecting materials such as small metal particles or beads. In one embodiment, a smooth reflective surface should not be placed below the gelatin layer.

### SPF Determination vis DRS Hybrid Technique

For determination of SPF of the sunscreen, the Hybrid DRS methodology can be employed as shown in prior publications, as discussed above. The UVA absorbance spectrum of the sunscreen is determined using the DRS scan of the absorbance of the UVA wavelengths in *in vivo* mode. The full spectrum from 290 to 400 mm is determined with the scan from the *in vitro* mode, as described above. The *in vitro* absorbance scan is adjusted to match the absorbance values of the *in vivo* absorbance scan by equating the absorbance in the range 330-350 nm and attaching the UVB portion of the *in vitro* scan to the *in vivo* absorbance scan to have a completed 290-400 mm absolute range of absorbance. From this absorbance curve SPF, UVA-PF, Critical Wavelength, and other UV ratios can be calculated for sunscreen protection determinations.

The presently disclosed technology thus allows two functions required for Hybrid SPF testing to be combined into one device using the same optical elements. As a result, full spectral absorption analysis can be performed on the *in vitro* substrate, and provides a partial (UVA) absorbance spectrum on human (or skin substitute) that can be used to scale the *in vitro* absorbance curve. Thus, the user is only required to purchase, learn, and operate just one piece of equipment.

Use of an optimized sunscreen substrate assembly comprised of a thin sunscreen substrate over a layer of layer of gelatin or other media containing non-absorbing scattering elements, provides absorbance spectra superior to other optical arrangements.

While the presently disclosed technology has been described in detail and with reference to specific examples thereof, it will be apparent to one skilled in the art that various changes and modifications can be made therein without departing from the scope of the appended claims. It is understood, therefore, that the presently disclosed technology is not limited to the particular embodiments disclosed, but it is intended to cover modifications within the scope of the present presently disclosed technology as defined by the appended claims.

## Claims

1. A method of *in vitro* measurement of the protection of a sunscreen composition (22) by diffuse reflectance spectroscopy of the absorption of a composition of light in the range of 290-400nm comprising:
providing a sunscreen substrate (20);
applying the sunscreen composition (22) to the sunscreen substrate (20),
directing a light source (12) at the sunscreen composition (22) on the sunscreen substrate (20), the light source being configured to emit light between 290nm and 400nm; and
measuring the amount of light remitted off of the sunscreen substrate assembly (18) comprising the sunscreen substrate (20) and the sunscreen composition (22);
**characterized in that:**
the sunscreen substrate assembly (18) additionally comprises i) a layer of gelatin (60) or other media containing non-absorbing scattering elements therein or ii) both a reflective surface and a layer of gelatin (60) or other media containing non-absorbing scattering elements therein,
on top of which the sunscreen substrate (20) is positioned.

2. The method of claim 1, wherein the sunscreen substrate (20) is a UVB transmissive substrate.

3. The method of claim 1, wherein the sunscreen substrate (20) is one of plastic food wrap, nylon film, or lambskin.

4. The method of claim 1, wherein the sunscreen substrate (20) is placed on top of the layer of gelatin.

5. The method of claim 4, wherein the layer of gelatin is placed on top of a layer of foil.

6. The method of claim 1, wherein at least some of the light from the light source travels through the sunscreen composition, travels through the sunscreen substrate (20), is remitted off of the layer of gelatin or the other media containing non-absorbing scattering elements therein, or remitted off of the reflective surface and the layer of gelatin or the other media containing non-absorbing scattering elements therein, travels back through the sunscreen substrate, travels back through the sunscreen composition, travels into an optical head of a fiber optic guide, and travels to a photosensor.

7. A system for *in vitro* measurement of the protection of a sunscreen composition (22) by diffuse reflectance spectroscopy of the absorption of a composition of light in the range of 290-400nm comprising:
a fiber optic guide;
a light emission and sensing device positioned at one end of the fiber optic guide, the light emission and sensing device configured to emit light between 290nm and 400nm; and
a sunscreen substrate assembly (18) positioned at another end of the fiber optic guide, the sunscreen substrate assembly (18) including a sunscreen substrate (20) configured such that the sunscreen composition (22) can be applied to the sunscreen substrate (20);
**characterized in that:**
the sunscreen substrate (20) is positioned on top of i) a layer of gelatin (60) or other media containing non-absorbing scattering elements therein or ii) both a reflective surface and a layer of gelatin (60) or other media containing non-absorbing scattering elements therein; and
a photosensor of the light emission and sensing device is configured to measure at least some light emitted from the light emission and sensing device that is remitted off of the sunscreen substrate assembly (18).

8. The system of claim 7, wherein the light emission and sensing device includes a xenon flash lamp.

9. The system of claim 7, wherein the fiber optic guide includes an emitted light conduit for conducting light from the light source to the sunscreen composition and a remitted light conduit for conducting light remitted from the sunscreen composition to the photosensor.

10. The system of claim 7, wherein the sunscreen substrate (20) is a UVB transmissive substrate.

11. The system of claim 7, wherein the sunscreen substrate (20) is one of plastic food wrap, nylon film, or lambskin.

12. The system of claim 7, wherein the sunscreen substrate (20) is positioned on top of the layer of gelatin.

13. The system of claim 12, wherein the layer of gelatin is positioned on top of a layer of foil.

## Patentansprüche

1. Verfahren zur: In-vitro-Messung des Schutzes einer Sonnenschutzmittelzusammensetzung (22) durch diffuse Reflexionsspektroskopie der Absorption einer Zusammensetzung von Licht im Bereich von 290-400 nm, umfassend:
Bereitstellen eines Sonnenschutzmittelsubstrats (20);
Auftragen der Sonnenschutzmittelzusammensetzung (22) auf das Sonnenschutzmittelsubstrat (20),
Richten einer Lichtquelle (12) auf die Sonnenschutzmittelzusammensetzung (22) auf dem Sonnenschutzmittelsubstrat (20), wobei die Lichtquelle zum Emittieren von Licht zwischen 290 nm und 400 nm ausgelegt ist; und
Messen der Menge von Licht, die von der Sonnenschutzmittelsubstratbaugruppe (18), umfassend das Sonnenschutzmittelsubstrat (20) und die Sonnenschutzmittelzusammensetzung (22), wieder abgestrahlt wird;
**dadurch gekennzeichnet, dass:**
die Sonnenschutzmittelsubstratbaugruppe (18) zusätzlich i) eine Schicht aus Gelatine (60) oder anderen Medien, enthaltend nicht absorbierende Streuelemente darin, oder ii) sowohl eine reflektierende Fläche als auch eine Schicht aus Gelatine (60) oder anderen Medien, enthaltend nicht absorbierende Streuelemente darin, umfasst, auf der das Sonnenschutzmittelsubstrat (20) positioniert ist.

2. Verfahren nach Anspruch 1, wobei es sich bei dem Sonnenschutzmittelsubstrat (20) um ein UVB-durchlässiges Substrat handelt.

3. Verfahren nach Anspruch 1, wobei es sich bei dem Sonnenschutzmittelsubstrat (20) um eines von Kunststoff-Lebensmittelfolie, Nylonfolie oder Lammfell handelt.

4. Verfahren nach Anspruch 1, wobei das Sonnenschutzmittelsubstrat (20) auf die Schicht aus Gelatine platziert wird.

5. Verfahren nach Anspruch 4, wobei die Schicht aus Gelatine auf eine Folienschicht platziert wird.

6. Verfahren nach Anspruch 1, wobei sich mindestens ein Teil des Lichts von der Lichtquelle durch die Sonnenschutzmittelzusammensetzung bewegt, sich durch das Sonnenschutzmittelsubstrat (20) bewegt, von der Schicht aus Gelatine oder den anderen Medien, enthaltend nicht absorbierende Streuelemente darin, wieder abgestrahlt wird oder von der reflektierenden Fläche und der Schicht aus Gelatine oder den anderen Medien, enthaltend nicht absorbierende Streuelemente darin, wieder abgestrahlt wird, sich durch das Sonnenschutzmittelsubstrat zurück bewegt, sich durch die Sonnenschutzmittelzusammensetzung zurück bewegt, sich in einen optischen Kopf eines faseroptischen Leiters bewegt und sich zu einem Fotosensor bewegt.

7. System zur: In-vitro-Messung des Schutzes einer Sonnenschutzmittelzusammensetzung (22) durch diffuse Reflexionsspektroskopie der Absorption einer Zusammensetzung von Licht im Bereich von 290-400 nm, umfassend:
einen faseroptischen Leiter;
eine an einem Ende des faseroptischen Leiters positionierte Lichtemissions- und -erfassungsvorrichtung, die zum Emittieren von Licht zwischen 290 nm und 400 nm ausgelegt ist; und
eine an einem anderen Ende des faseroptischen Leiters positionierte Sonnenschutzmittelsubstratbaugruppe (18), wobei die Sonnenschutzmittelsubstratbaugruppe (18) ein Sonnenschutzmittelsubstrat (20) beinhaltet, das derart ausgelegt ist, dass die Sonnenschutzmittelzusammensetzung (22) auf das Sonnenschutzmittelsubstrat (20) aufgetragen werden kann;
**dadurch gekennzeichnet, dass:**
das Sonnenschutzmittelsubstrat (20) auf i) einer Schicht aus Gelatine (60) oder anderen Medien, enthaltend nicht absorbierende Streuelemente darin, oder ii) sowohl einer reflektierenden Fläche als auch einer Schicht aus Gelatine (60) oder anderen Medien, enthaltend nicht absorbierende Streuelemente darin, positioniert ist; und
ein Fotosensor der Lichtemissions- und -erfassungsvorrichtung zum Messen von mindestens einem Teil von von der Lichtemissions- und -erfassungsvorrichtung emittiertem Licht, das von der Sonnenschutzsubstratbaugruppe (18) wieder abgestrahlt wird, ausgelegt ist.

8. System nach Anspruch 7, wobei die Lichtemissions- und - erfassungsvorrichtung eine Xenon-Blitzlampe beinhaltet.

9. System nach Anspruch 7, wobei der faseroptische Leiter eine Leitung für emittiertes Licht zum Leiten von Licht von der Lichtquelle zu der Sonnenschutzmittelzusammensetzung und eine Leitung für wieder abgestrahltes Licht zum Leiten von von der Sonnenschutzmittelzusammensetzung wieder abgestrahltem Licht zu dem Fotosensor umfasst.

10. System nach Anspruch 7, wobei es sich bei dem Sonnenschutzmittelsubstrat (20) um ein UVB-durchlässiges Substrat handelt.

11. System nach Anspruch 7, wobei es sich bei dem Sonnenschutzmittelsubstrat (20) um eines von Kunststoff-Lebensmittelfolie, Nylonfolie oder Lammfell handelt.

12. System nach Anspruch 7, wobei das Sonnenschutzmittelsubstrat (20) auf der Schicht aus Gelatine positioniert ist.

13. System nach Anspruch 12, wobei die Schicht aus Gelatine auf einer Folienschicht positioniert ist.

## Revendications

1. Procédé de : mesure *in vitro* de la protection d'une composition de protection solaire (22) par spectroscopie de réflectance diffuse de l'absorption d'une composition de lumière comprise dans la plage allant de 290 à 400 nm comprenant :
la fourniture d'un substrat de protection solaire (20) ;
l'application de la composition de protection solaire (22) sur le substrat de protection solaire (20),
la direction d'une source lumineuse (12) vers la composition de protection solaire (22) sur le substrat de protection solaire (20), la source lumineuse étant configurée pour émettre de la lumière comprise entre 290 nm et 400 nm ; et
la mesure de la quantité de lumière renvoyée par l'ensemble de substrat de protection solaire (18) comprenant le substrat de protection solaire (20) et la composition de protection solaire (22) ;
**caractérisé en ce que :**
l'ensemble de substrat de protection solaire (18) comprend également i) une couche de gélatine (60) ou d'autres milieux contenant en leur sein des éléments diffusants non absorbants ou ii) à la fois une surface réfléchissante et une couche de gélatine (60) ou d'autres milieux contenant en leur sein des éléments diffusants non absorbants, au-dessus desquels est positionné le substrat de protection solaire (20).

2. Procédé selon la revendication 1, dans lequel le substrat de protection solaire (20) est un substrat transmettant des UVB.

3. Procédé selon la revendication 1, dans lequel le substrat de protection solaire (20) est l'un d'un film alimentaire en plastique, d'un film en nylon ou d'une peau d'agneau.

4. Procédé selon la revendication 1, dans lequel le substrat de protection solaire (20) est placé au-dessus de la couche de gélatine.

5. Procédé selon la revendication 4, dans lequel la couche de gélatine est placée au-dessus d'une couche de feuille d'aluminium.

6. Procédé selon la revendication 1, dans lequel au moins une partie de la lumière provenant de la source lumineuse traverse la composition de protection solaire, traverse le substrat de protection solaire (20), est renvoyée par la couche de gélatine ou par les autres milieux contenant en leur sein des éléments diffusants non absorbants, ou est renvoyée par la surface réfléchissante et la couche de gélatine ou par les autres milieux contenant en leur sein des éléments diffusants non absorbants, traverse à nouveau le substrat de protection solaire, traverse à nouveau la composition de protection solaire, pénètre dans une tête optique d'un guide de fibres optiques et se dirige vers un photosenseur.

7. Système destiné à : mesurer *in vitro* la protection d'une composition de protection solaire (22) par spectroscopie de réflectance diffuse de l'absorption d'une composition de lumière comprise dans la plage allant de 290 à 400 nm comprenant :
un guide de fibres optiques ;
un dispositif d'émission et de détection de lumière positionné au niveau d'une extrémité du guide de fibres optiques, le dispositif d'émission et de détection de lumière étant configuré pour émettre de la lumière comprise entre 290 nm et 400 nm ; et
un ensemble de substrat de protection solaire (18) positionné au niveau d'une autre extrémité du guide de fibres optiques, l'ensemble de substrat de protection solaire (18) comportant un substrat de protection solaire (20) configuré de telle sorte que la composition de protection solaire (22) puisse être appliquée sur le substrat de protection solaire (20) ;
**caractérisé en ce que :**
le substrat de protection solaire (20) est positionné au-dessus i) d'une couche de gélatine (60) ou d'autres milieux contenant en leur sein des éléments diffusants non absorbants ou au-dessus ii) à la fois d'une surface réfléchissante et d'une couche de gélatine (60) ou d'autres milieux contenant en leur sein des éléments diffusants non absorbants ; et
un photosenseur du dispositif d'émission et de détection de lumière est configuré pour mesurer au moins une partie de la lumière émise par le dispositif d'émission et de détection de lumière qui est renvoyée par l'ensemble de substrat de protection solaire (18).

8. Système selon la revendication 7, dans lequel le dispositif d'émission et de détection de lumière comporte une lampe flash au xénon.

9. Système selon la revendication 7, dans lequel le guide de fibres optiques comporte un conduit de lumière émise destiné à conduire la lumière depuis la source lumineuse vers la composition de protection solaire et un conduit de lumière renvoyée destiné à conduire la lumière renvoyée depuis la composition de protection solaire vers le photosenseur.

10. Système selon la revendication 7, dans lequel le substrat de protection solaire (20) est un substrat transmettant des UVB.

11. Système selon la revendication 7, dans lequel le substrat de protection solaire (20) est l'un d'un film alimentaire en plastique, d'un film en nylon ou d'une peau d'agneau.

12. Système selon la revendication 7, dans lequel le substrat de protection solaire (20) est positionné au-dessus de la couche de gélatine.

13. Système selon la revendication 12, dans lequel la couche de gélatine est positionnée au-dessus d'une couche de feuille d'aluminium.
